# EUROPÄISCHE PATENTSCHRIFT

(11) **EP 2 722 262 B1**
(45) Veröffentlichungstag und Bekanntmachung des Hinweises auf die Patenterteilung: **09.12.2020**
(21) Anmeldenummer: 13188440.5
(22) Anmeldetag: 14.10.2013
(51) Int. Cl.: B62D 59/04, H05K 1/14

(54) **Zentraleinheit für Rangierantrieb**
Central unit for manoeuvring drive
Unité centrale pour entraînement de manoeuvre

(30) Priorität: 22.10.2012 DE 202012010075 U
(43) Veröffentlichungstag der Anmeldung: 23.04.2014
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86356 Neusäss (DE); Müller, Jochen, 85665 Moosach (DE); Schmid, Tobias, 85435 Erding (DE); Müssler, Klaus, 85235 Egenburg (DE); Fernandez, Ana María, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE); Thiel, Stefan, 83022 Rosenheim (DE); Zawadski, Kamil, 85540 Haar (DE)
(74) Vertreter: Prinz & Partner mbB

(56) Entgegenhaltungen:
- EP-A1- 1 752 365
- EP-A1- 1 790 555
- EP-A1- 2 360 543
- DE-U1-202009 005 524
- DE-U1-202010 008 600
- JP-A- 2008 305 789
- JP-A- 2009 164 632
- JP-A- 2010 110 059
- JP-B1- 3 867 729
- JP-B2- 2 765 286
- US-A- 4 733 461

## Beschreibung

Die Erfindung betrifft eine Zentraleinheit eines Rangierantriebs für eines Anhängers.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Die Zentraleinheit bildet ein zentrales Steuergerät für den Rangierantrieb, über das sowohl die elektrische Energieversorgung der Antriebseinheiten als auch deren Ansteuerung läuft. Um eine ordnungsgemäße Funktion des Rangierantriebs zu gewährleisten, muss bei der Montage des Rangierantriebs und auch nach einem eventuellen Austausch der Zentraleinheit gewährleistet sein, dass alle Kabel mit den korrekten Anschlüssen verbunden sind. Andernfalls kann es zu Fehlfunktionen bis hin zu einer Zerstörung der Zentraleinheit kommen, nämlich wenn diese mit vertauschten Anschlüssen an eine Stromversorgung angeschlossen wird.

Die DE 20 2009 005 524 U1 beschreibt einen Hilfsantrieb für ein Fahrzeug mit mindestens einer an ein Fahrzeugrad zustellbaren Antriebseinheit und einer Betätigungseinrichtung mit einem Steuerfeld zur Steuerung der mindestens einen Antriebseinheit.

Die Aufgabe der Erfindung besteht darin, die Zentraleinheit so auszugestalten, dass das Anschließen der verschiedenen Kabel erleichtert und das Verwechseln von Anschlüssen verhindert wird.

Zur Lösung dieser Aufgabe ist erfindungsgemäß eine Zentraleinheit eines Rangierantriebs eines Anhängers vorgesehen, mit mehreren Anschlüssen für Steuerleitungen, Phasenleitungen und Masseleitungen, wobei die verschiedenen Anschlüsse räumlich getrennt angeordnet sind, wobei eine untere Ebene vorgesehen ist, in der die Anschlüsse der Masseleitungen angeordnet sind, eine mittlere Ebene, in der die Anschlüsse der Phasenleitungen angeordnet sind, und einer obere Ebene, in der die Anschlüsse der Steuerleitungen angeordnet sind, und wobei die Anschlüsse der unterschiedlichen Ebenen, betrachtet entlang einer Zuführungsrichtung der Leitungen, gestaffelt hintereinander angeordnet sind..

Die Erfindung beruht auf dem Grundgedanken, die unterschiedlichen Anschlüsse so zu gruppieren, dass sich eine logische Zuordnung der verschiedenen Anschlüsse zu den verschiedenen Kabeln von alleine ergibt. Dadurch wird ein Monteur bereits durch die Anordnung der unterschiedlichen Anschlüsse, also der Anschlüsse für die Masseleitungen, der Anschlüsse für die Phasenleitungen und der Anschlüsse für die Steuerleitungen, dahin geführt, die verschiedenen Leitungen an den richtigen, ihnen zugeordneten Anschlüssen anzubringen.

Bereits eine Anordnung der unterschiedlichen Anschlüsse in übereinanderliegenden Ebenen führt einen Monteur automatisch dahin, die unterschiedlichen Leitungen in einer sinnvollen Reihenfolge anzuschließen, nämlich zuerst unten die Masseleitungen, dann darüber die Phasenleitungen und zuoberst die Steuerleitungen. Würde er dagegen mit den Steuerleitungen beginnen, würden diese sich über die Anschlüsse für die Phasenleitungen und die Masseleitungen erstrecken und diese abdecken, was das Anbringen der Phasenleitungen und Masseleitungen erschwert.

Aufgrund der hintereinander gestaffelten Anordnung der Anschlüsse kann durch eine geeignete Gruppierung der unterschiedlichen Anschlüsse einem Monteur nahegelegt werden, die Leitungen in der richtigen Reihenfolge und damit an den richtigen Anschlüssen anzuschließen. Intuitiv würde ein Monteur die Masseleitungen zuerst anschließen, wobei sich dafür die am weitesten vorne liegenden Anschlüsse aufdrängen. Anschließend folgen die Phasenleitungen, die auf die etwas weiter hinten liegenden Anschlüsse aufgesteckt werden. Als Letztes verbleiben die Steuerleitungen.

Vorzugsweise ist vorgesehen, dass die Anschlüsse für die Phasen- und die Masseleitungen als Anschlussschrauben ausgeführt sind und sich zumindest teilweise hinsichtlich ihres Durchmessers unterscheiden. Auf diese Weise wird mechanisch verhindert, dass beispielsweise die Kabelschuhe der Phasenleitungen auf die Anschlüsse für die Masseleitungen aufgesteckt werden können.

Vorzugsweise ist vorgesehen, dass die Anschlüsse für die Stromversorgung der Zentraleinheit einen anderen Durchmesser haben als die Anschlüsse, die Antriebseinheiten des Rangiersystems zugeordnet sind. Auch dies verhindert, dass Leitungen mit "falschen" Anschlüssen verbunden werden.

Vorzugsweise ist ein zentraler elektronischer Leistungsschalter vorgesehen, insbesondere ein Leistungstransistor, der einen Überspannungs- und Verpolschutz realisiert. Dieser Leistungsschalter stellt eine zusätzliche Absicherung dar, mit der eine Beschädigung von Schaltungen der Zentraleinheit verhindert werden kann, falls es einem Monteur doch gelungen sein sollte, beispielsweise die Phasen- und die Masseleitung für die Stromversorgung der Zentraleinheit zu vertauschen. Alternativ oder ergänzend zum zentralen elektronischen Leistungsschalter kann für jede Antriebseinheit ein elektronischer Leistungsschalter vorgesehen sein, insbesondere ein Leistungstransistor, der ebenfalls als Absicherung gegen Überspannung dient.

Vorzugsweise ist ein Temperatursensor vorgesehen, dessen Signal ein Abschalten der Zentraleinheit und/oder der Antriebseinheiten auslösen kann. Mit einem solchen Temperatursensor kann mit geringem Aufwand eine Beschädigung der Steuerungen der Zentraleinheit und möglicherweise auch der Antriebseinheiten verhindert werden. Dabei können zum Abschalten die Leistungstransistoren verwendet werden, die auch als Überspannungs- und Verpolschutz dienen.

Der Temperatursensor kann in den Leistungstransistor integriert sein, so dass dieser als intelligenter MOSFET ausgeführt ist (auch bekannt als "PROFET" von Infineon). Alternativ kann der Temperatursensor auch getrennt vom Leistungstransistor ausgeführt sein und mit diesem gekoppelt sein.

Die Erfindung wird nachfolgend anhand zweier Ausführungsformen beschrieben, die in den beigefügten Zeichnungen dargestellt sind. In diesen zeigen:
- Figur 1 in einer schematischen Seitenansicht einen Anhänger mit Rangierantrieb;
- Figur 2 in einer schematischen Draufsicht den Anhänger von Figur 1;
- Figur 3 in einer perspektivischen Explosionsansicht die drei Anschlussebenen einer Zentraleinheit gemäß einer ersten Ausführungsform der Erfindung;
- Figur 4 die drei Anschlussebenen der Zentraleinheit von Figur 3 in einer ersten perspektivischen Ansicht;
- Figur 5 die drei Anschlussebenen der Zentraleinheit von Figur 3 in einer zweiten perspektivischen Ansicht;
- Figur 6 in einer perspektivischen Explosionsansicht die drei Anschlussebenen einer Zentraleinheit gemäß einer zweiten Ausführungsform der Erfindung;
- Figur 7 die drei Anschlussebenen der Zentraleinheit von Figur 6 in einer ersten perspektivischen Ansicht; und
- Figur 8 die drei Anschlussebenen der Zentraleinheit von Figur 6 in einer zweiten perspektivischen Ansicht.

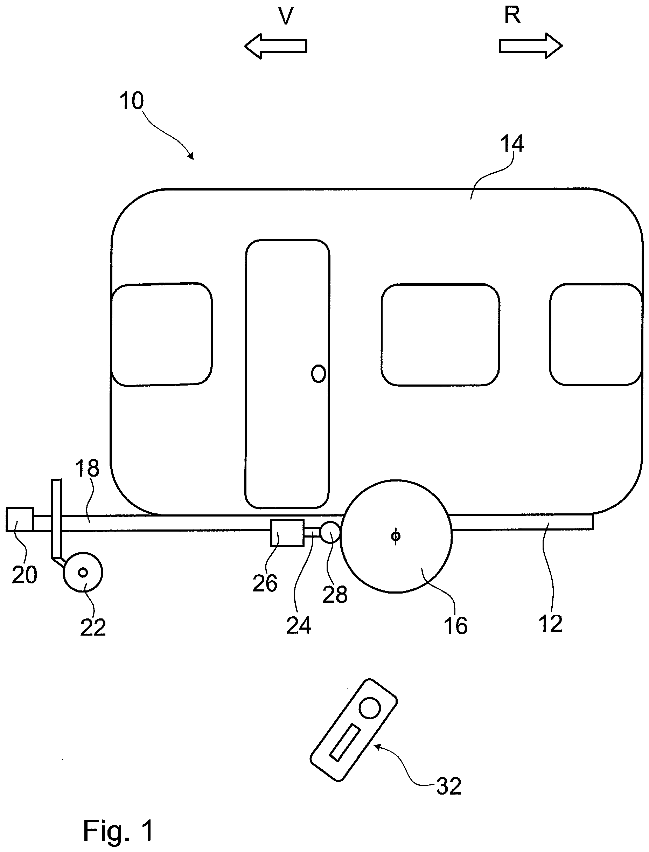

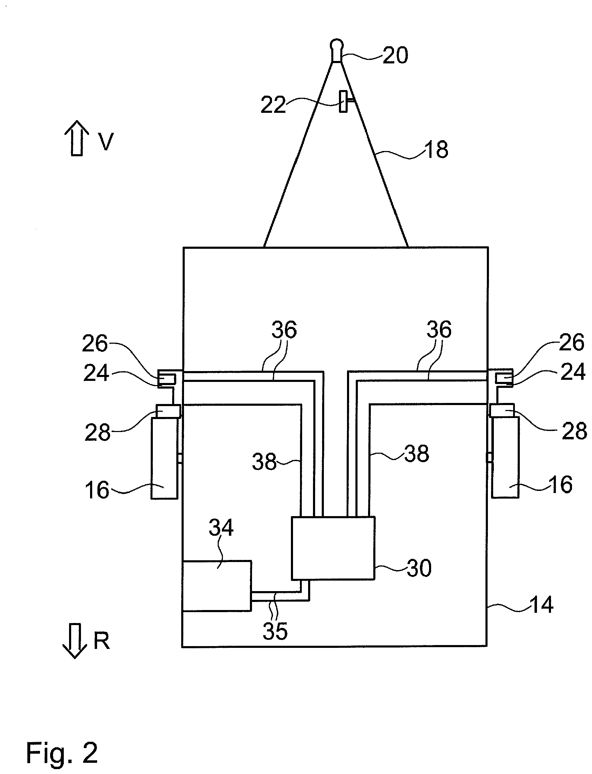

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Antriebsmotor 26 angetrieben werden kann. Die Antriebsrolle 28 kann mit dem zugeordneten Rad 16 des Anhängers 10 in Eingriff gebracht werden.

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 über Leitungen mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich kann derselbe Rangierantrieb auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

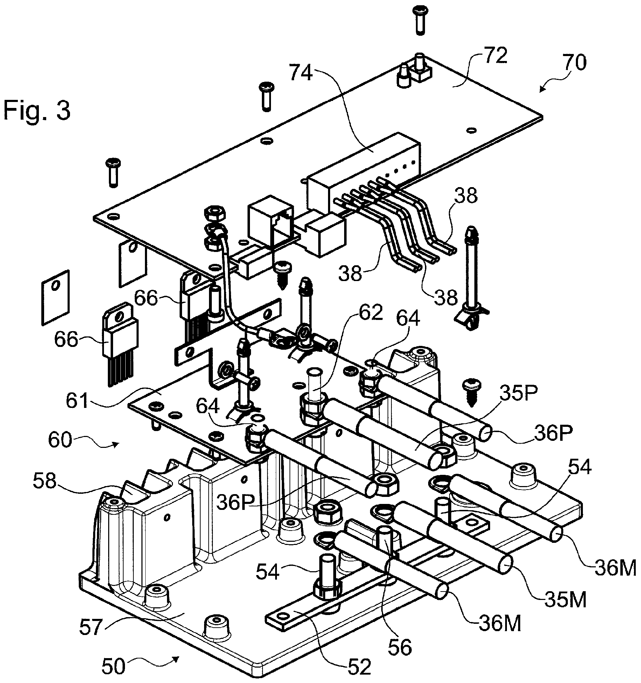

In den Figuren 3 bis 5 sind schematisch die drei Anschlussebenen für eine Zentraleinheit gemäß einer ersten Ausführungsform gezeigt. Bei der ersten Ausführungsform dient die Zentraleinheit 30 dafür, die beiden aus den Figuren 1 und 2 bekannten Antriebseinheiten 24 anzusteuern. Die sonstigen Bestandteile der Zentraleinheit, insbesondere ein Großteil der elektronischen Bauteile, die auf den Leiterplatten 61, 72 angeordnet sind, sind hier der besseren Übersichtlichkeit halber nicht gezeigt.

Es ist eine erste Anschlussebene 50 vorgesehen, die zum Anschließen von Masseleitungen dient und hier als Anschlussschiene 52 ausgeführt ist. Die Anschlussschiene ist hier mit insgesamt drei Anschlüssen in der Form von Anschlussschrauben oder Schraubbolzen 54, 56 versehen, wobei die beiden außen liegenden Anschlussschrauben 54 zum Anschließen von Masseleitungen 36M dienen, die zu den beiden Antriebseinheiten 24 führen, und die mittlere Anschlussschraube 56 zum Anschließen einer Masseleitung 35M dient, die zum Akkumulator 34 führt.

Die Anschlussschiene 52 ist an einem massiven Trägerkörper 57 angebracht, der auch mit einem Kühlkörper 58 versehen ist.

Die Masseleitungen 35M, 36M sind jeweils mit Kabelschuhen versehen, die auf die Anschlussschrauben 54, 56 aufgesetzt und dort mit Muttern befestigt werden.

Eine zweite Anschlussebene 60 dient dazu, die Phasenleitungen anzuschließen. Die zweite Anschlussebene 60 ist durch eine Leiterplatte 61 gebildet. Auch hier sind die Anschlüsse als Anschlussschrauben ausgeführt, wobei eine mittlere Anschlussschraube 62 für eine Phasenleitung 35P verwendet wird, die zum Akkumulator 34 führt, und zwei außen liegende Anschlussschrauben 64 für Phasenleitungen 36P verwendet werden, die zu den Antriebseinheiten 24 führen.

Auch die Phasenleitungen 35P, 36P werden mittels an ihnen angebrachter Kabelschuhe und Muttern an den Anschlussschrauben 62, 64 angebracht.

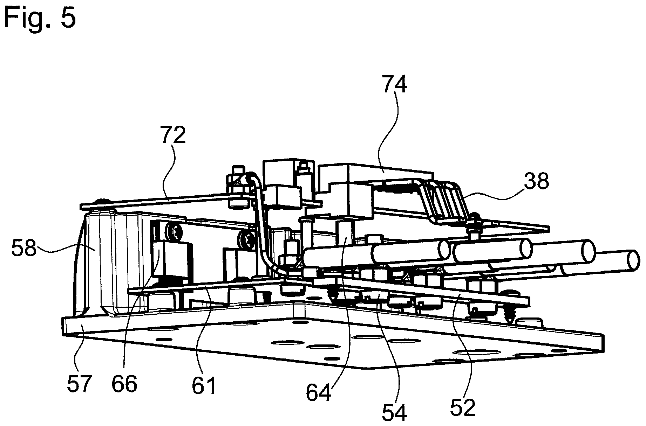

Auf der Leiterplatte 61 sind auch Leistungstransistoren 66 montiert, die mit dem Kühlkörper 58 in einer gut wärmeleitenden Verbindung stehen (siehe insbesondere Figur 5).

Schließlich ist eine dritte Anschlussebene 70 vorgesehen, die zum Anschließen der Steuerleitungen 38 dient und in gleicher Weise wie die zweite Anschlussebene als Leiterplatte 72 ausgeführt ist. Die Anschlüsse für die Steuerleitungen 38 sind hier in einem Anschlussklemmenblock 74 vorgesehen, der auf der Leiterplatte 72 angeordnet ist.

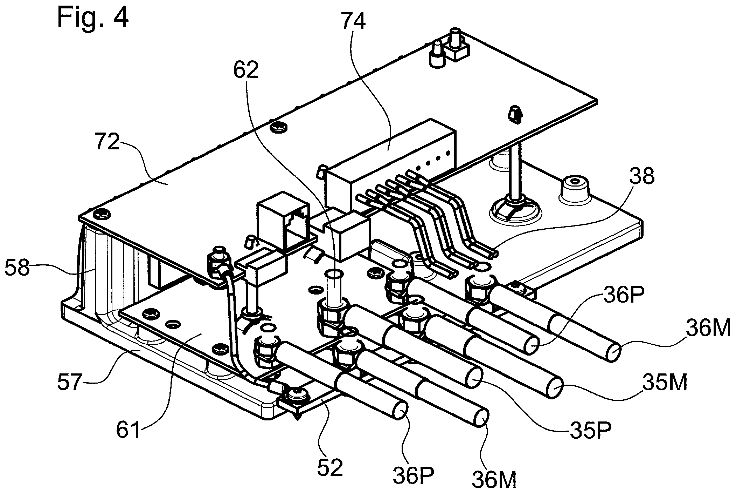

Wie insbesondere in Figur 4 zu sehen ist, sind die Anschlüsse für die Masseleitungen, die Phasenleitungen und die Steuerleitungen nicht nur in verschiedenen Ebenen übereinander angeordnet, sondern auch, betrachtet entlang einer Zuführungsrichtung der Leitungen, gestaffelt hintereinander. Dabei liegen die Anschlussschrauben 54, 56 für die Masseleitungen 35M, 36M am weitesten vorne. Etwas dahinter (und auch darüber) liegen die Anschlussschrauben 62, 64 für die Phasenleitungen 35P, 36P. Nochmals weiter zurückgesetzt (und auch nochmals höher) liegt der Anschlussklemmenblock 74 für die Steuerleitungen 38.

Durch diese räumliche Anordnung der Anschlüsse in zwei Richtungen wird ein Monteur intuitiv dazu geführt, die verschiedenen Leitungen in der richtigen Reihenfolge anzuschließen. Zuerst werden die Masseleitungen 35M, 36M angeschlossen, wobei sich hierfür die unten und vorne liegenden Anschlussschrauben 54, 56 aufdrängen. Als Nächstes folgen die Phasenleitungen 35P, 36P, für die dann nur die Anschlussschrauben 62, 64 der zweiten Anschlussebene 60 verbleiben. Schließlich folgen die Steuerleitungen 38.

Das korrekte Anschließen der unterschiedlichen Leitungen kann auch durch eine Farbkennzeichnung der beiden Anschlussebenen 50, 60 unterstützt werden.

Während die Zuordnung der Masseleitungen 35M, 36M zu den Anschlussschrauben 54, 56 ohne praktische Bedeutung ist, muss beim Anschließen der Phasenleitungen 35P, 36P in der zweiten Anschlussebene 60 sichergestellt werden, dass dort das richtige Kabel auch mit dem richtigen Anschluss verbunden wird. Andernfalls würde beispielsweise, wenn die Zentraleinheit 30 die rechte Antriebseinheit 24 ansteuert, tatsächlich die linke Antriebseinheit das ihr zugeordnete Rad 16 drehen. Daher sind die einzelnen Anschlussschrauben 62 vorzugsweise entsprechend gekennzeichnet. Weiterhin werden für die Anschlussschrauben 62 einerseits und die Anschlussschrauben 64 andererseits unterschiedliche Durchmesser verwendet, sodass verhindert werden kann, dass der Phasenleiter 35P, der zum Akkumulator 34 führt, auf eine der Anschlussschrauben 64 aufgesetzt werden kann, oder umgekehrt.

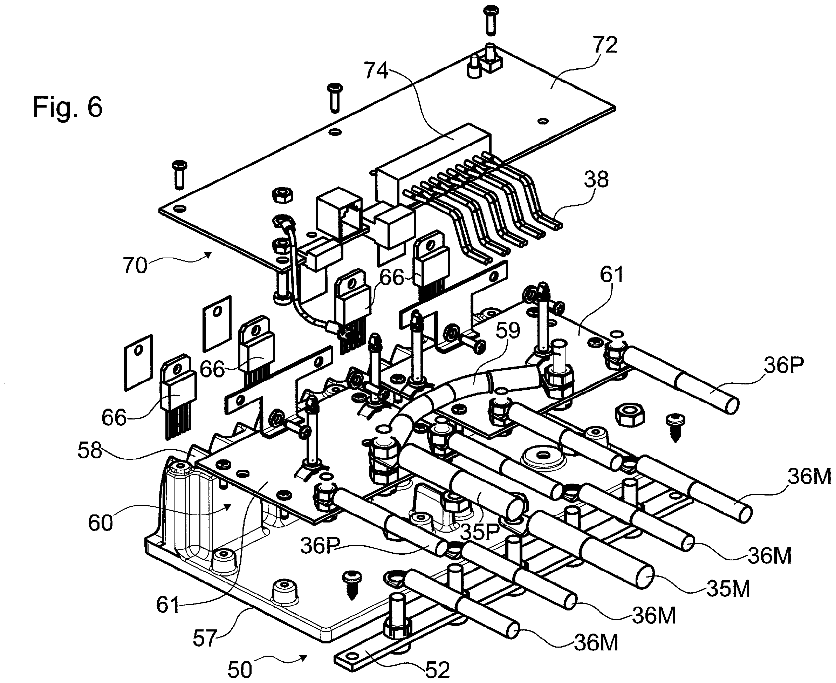

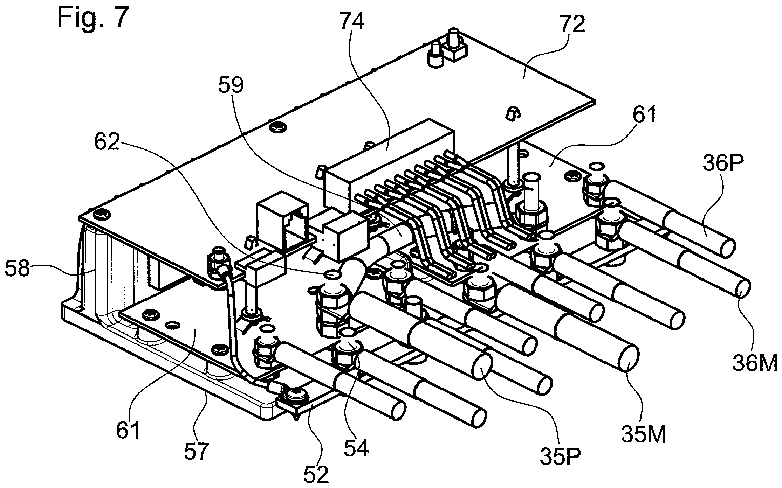

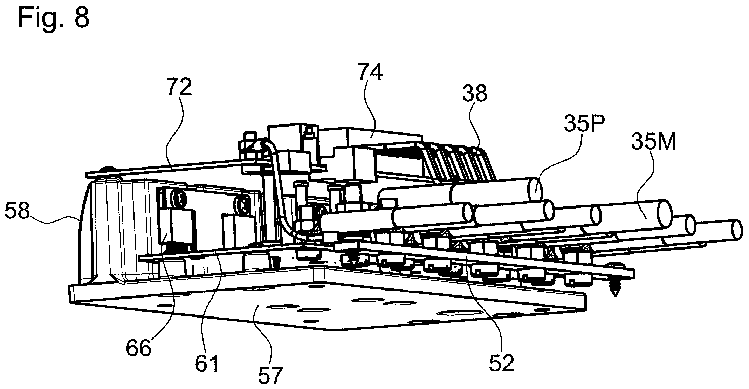

In den Figuren 6 bis 8 ist eine zweite Ausführungsform der Zentraleinheit 30 gezeigt. Für die von der ersten Ausführungsform bekannten Bauteile werden dieselben Bezugszeichen verwendet, und es wird insoweit auf die obigen Erläuterungen verwiesen.

Der Unterschied zwischen der ersten und der zweiten Ausführungsform besteht darin, dass bei der zweiten Ausführungsform die Zentraleinheit zum Anschließen von insgesamt vier Antriebseinheiten 24 verwendet wird. Dementsprechend sind auf der ersten Anschlussebene 50 vier Anschlussschrauben 54 vorhanden, und auf der zweiten Anschlussebene 60 sind vier Anschlussschrauben 64 und auch vier Leistungstransistoren 66 vorhanden.

Ein besonderes Merkmal der Zentraleinheit besteht darin, dass sie modular aufgebaut ist. Wie durch Vergleich beispielsweise der Figuren 3 und 6 zu erkennen ist, sind sehr wenige Modifikationen notwendig, um anstatt von zwei Antriebseinheiten 24 bei der ersten Ausführungsform nun vier Antriebseinheiten bei der zweiten Ausführungsform anzuschließen. Zum einen wird eine längere Anschlussschiene 52 verwendet, die Platz für alle Anschlussschrauben 54, 56 bietet. Zum anderen werden zwei identische Leiterplatten 61 nebeneinander am Trägerkörper 57 montiert, wobei ein Verbindungskabel 59 verwendet wird, um die Anschlussschraube 62 der zweiten Leiterplatte 61 mit dem zum Akkumulator 34 führenden Phasenleitung 35P zu verbinden. Hinsichtlich der Leiterplatte 72 sind gar keine Modifikationen notwendig.

## Patentansprüche

1. Zentraleinheit (30) eines Rangierantriebs eines Anhängers, mit mehreren Anschlüssen (54, 56, 62, 64, 74) für Steuerleitungen, Phasenleitungen und Masseleitungen, wobei die verschiedenen Anschlüsse (54, 56, 62, 64, 74) räumlich getrennt angeordnet sind, wobei eine untere Ebene (50) vorgesehen ist, in der die Anschlüsse (54, 56) der Masseleitungen (35M, 36M) angeordnet sind, eine mittlere Ebene (60), in der die Anschlüsse (62, 64) der Phasenleitungen (35P, 36P) angeordnet sind, und einer obere Ebene (70), in der die Anschlüsse (74) der Steuerleitungen (38) angeordnet sind, **dadurch gekennzeichnet, dass** die Anschlüsse (54, 56, 62, 64, 74) der unterschiedlichen Ebenen, betrachtet entlang einer Zuführungsrichtung der Leitungen (35, 36, 38), gestaffelt hintereinander angeordnet sind.

2. Zentraleinheit nach Anspruch 1, **dadurch gekennzeichnet, dass** die Anschlüsse für die Phasen- und die Masseleitungen als Anschlussschrauben (54, 56, 62, 64) ausgeführt sind und sich zumindest teilweise hinsichtlich ihres Durchmessers unterscheiden.

3. Zentraleinheit nach Anspruch 2, **dadurch gekennzeichnet, dass** die Anschlüsse (56, 62) für die Stromversorgung der Zentraleinheit einen anderen Durchmesser haben als die Anschlüsse (54, 64), die Antriebseinheiten (24) des Rangiersystems zugeordnet sind.

4. Zentraleinheit nach einem der vorhergehenden Ansprüche, **dadurch gekennzeichnet, dass** ein zentraler elektronischer Leistungsschalter vorgesehen ist, insbesondere ein Leistungstransistor, der einen Überspannungs- und Verpolschutz realisiert.

5. Zentraleinheit nach einem der Ansprüche 3 bis 4, **dadurch gekennzeichnet, dass** für jede Antriebseinheit ein elektronischer Leistungsschalter (66) vorgesehen ist, insbesondere ein Leistungstransistor, der auch als Absicherung gegen Überspannung dient.

6. Zentraleinheit nach Anspruch 4 oder Anspruch 5, **dadurch gekennzeichnet, dass** ein Temperatursensor vorgesehen ist, dessen Signal ein Abschalten der Zentraleinheit und/oder der Antriebseinheiten auslösen kann.

## Claims

1. A central unit (30) of a maneuvering drive of a trailer, comprising a plurality of connections (54, 56, 62, 64, 74) for control wires, phase wires and ground wires, the different connections (54, 56, 62, 64, 74) being arranged spatially separated, a lower level (50) being provided in which the connections (54, 56) of the ground wires (35M, 36M) are arranged, a middle level (60) being provided in which the connections (62, 64) of the phase wires (35P, 36P) are arranged, and an upper level (70) being provided in which the connections (74) of the control wires (38) are arranged, **characterized in that** the connections (54, 56, 62, 64, 74) of the different levels, as viewed along a supply direction of the wires (35, 36, 38), are arranged in a staggered manner one behind the other.

2. The central unit according to claim 1, **characterized in that** the connections for the phase and ground wires are in the form of connection bolts (54, 56, 62, 64) and differ at least partly with regard to their diameters.

3. The central unit according to claim 2, **characterized in that** the connections (56, 62) for the power supply of the central unit have a different diameter than the connections (54, 64) which are associated with drive units (24) of the maneuvering system.

4. The central unit according to any of the preceding claims, **characterized in that** a central electronic circuit breaker is provided, in particular a power transistor that implements overvoltage and reverse battery protection.

5. The central unit according to any of claims 3 to 4, **characterized in that** for each drive unit an electronic circuit breaker (66) is provided, in particular a power transistor, which also serves as a fuse protection against overvoltage.

6. The central unit according to claim 4 or claim 5, **characterized in that** a temperature sensor is provided, the signal of which can trigger a switch-off of the central unit and/or of the drive units.

## Revendications

1. Unité centrale (30) d'un entraînement de manœuvre d'une remorque, comportant plusieurs raccords (54, 56, 62, 64, 74) pour des lignes de commande, des lignes de phase et des lignes de terre, les différents raccords (54, 56, 62, 64, 74) étant agencés de manière séparée dans l'espace, un niveau inférieur (50), dans lequel les raccords (54, 56) des lignes de terre (35M, 36M) sont agencés, un niveau intermédiaire (60), dans lequel les raccords (62, 64) des lignes de phase (35P, 36P) sont agencés, et un niveau supérieur (70), dans lequel les raccords (74) des lignes de commande (38) sont agencés, étant prévus, **caractérisée en ce que** les raccords (54, 56, 62, 64, 74) des différents plans, vus dans le sens d'alimentation des lignes (35, 36, 38), sont agencés de manière échelonnée les uns derrière les autres.

2. Unité centrale selon la revendication 1, **caractérisée en ce que** les raccords pour les lignes de phase et de terre sont réalisés sous forme de vis de raccord (54, 56, 62, 64) et diffèrent au moins partiellement en ce qui concerne leur diamètre.

3. Unité centrale selon la revendication 2, **caractérisée en ce que** les raccords (56, 62) pour l'alimentation électrique de l'unité centrale ont un diamètre différent de celui des raccords (54, 64) associés à des unités d'entraînement (24) du système de manoeuvre.

4. Unité centrale selon l'une des revendications précédentes, **caractérisée en ce qu'**il est prévu un interrupteur de puissance électronique central, en particulier un transistor de puissance, lequel assure une protection contre les surtensions et les inversions de polarité.

5. Unité centrale selon l'une des revendications 3 à 4, **caractérisée en ce qu'**il est prévu un interrupteur de puissance électronique (66) pour chaque unité d'entraînement, en particulier un transistor de puissance, lequel sert également de protection contre les surtensions.

6. Unité centrale selon la revendication 4 ou la revendication 5, **caractérisée en ce qu'**il est prévu un capteur de température dont le signal peut déclencher une mise hors service de l'unité centrale et/ou des unités d'entraînement.
